# EUROPEAN PATENT SPECIFICATION

(11) **EP 2 177 740 B1**
(45) Date of publication and mention of the grant of the patent: **16.12.2015**
(21) Application number: 09013173.1
(22) Date of filing: 19.10.2009
(51) Int. Cl.: F02D 41/06, F02N 11/08, F02D 33/02, F02N 11/00, F02D 41/04, F02D 11/10

(54) **Controller of vehicle internal combustion engine**
Steuerung für Verbrennungsmotor von Fahrzeugen
Commande pour moteur à combustion interne de véhicule

(30) Priority: 20.10.2008 JP 2008270025
(43) Date of publication of application: 21.04.2010
(73) Proprietor: TOYOTA JIDOSHA KABUSHIKI KAISHA, Toyota-shi, Aichi-ken, 471-8571 (JP)
(72) Inventor: Yoshihara, Masatomo, Toyota-shi, Aichi-ken 471-8571 (JP); Nakamura, Yoshifumi, Toyota-shi, Aichi-ken 471-8571 (JP); Okamura, Koji, Toyota-shi, Aichi-ken 471-8571 (JP); Uchida, Akito, Toyota-shi, Aichi-ken 471-8571 (JP); Hatta, Yuuji, Toyota-shi, Aichi-ken 471-8571 (JP); Masuda, Satoshi, Kariya-shi, Aichi-ken 448-8661 (JP)
(74) Representative: Winter, Brandl, Fürniss, Hübner, Röss, Kaiser, Polte - Partnerschaft mbB

(56) References cited:
- EP-A2- 1 288 472
- WO-A1-2005/121531
- WO-A1-2008/110910
- JP-A- 2008 215 154

## Description

### FIELD OF THE INVENTION

The present invention relates to a controller of a vehicle internal combustion engine, and, more particularly, to a controller for controlling restarting performance of an internal combustion engine that is automatically stopped and restarted under certain conditions related to operation of the vehicle.

### BACKGROUND OF THE INVENTION

For example, Japanese Laid-Open Patent Publication No. 2005-36790 discloses a controller of a vehicle internal combustion engine having an economy running function. Through the economy running function, the engine is controlled in such a manner that operation of the engine is automatically stopped when a certain condition related to operation of the vehicle is met and restarted when the condition is no longer satisfied. More specifically, when conditions 1) to 3) described below, for example, are satisfied, the controller determines that an automatic stopping condition, which is a condition for automatically stopping the engine as the control target, is satisfied.
1) The vehicle having the internal combustion engine is temporarily stopped, for example, at a stop signal (in other words, the traveling speed of the vehicle drops to a level lower than or equal to a predetermined speed);
2) The depression amount of the accelerator pedal depressed by the driver is 0; and
3) The brake pedal is depressed by the driver.

When the automatic stopping condition is met, the fuel injection amount of the engine is set to 0, or in other words, fuel cutoff is carried out, to automatically stop the operation of the engine. Afterwards, on the condition that the depression amount of the accelerator pedal depressed by the driver is not 0 or the brake pedal is not depressed by the driver, the controller determines that a restarting condition of the engine is satisfied. The controller then actuates a generator-motor, which is an auxiliary device of the engine, to restart the operation of the engine. The controller described in the aforementioned publication decreases the fuel consumption related to the operation of the engine through the above-described series of control.

As disclosed in Japanese Laid-Open Patent Publication No. 2006-63913, a constant mesh type starter is often employed as a starter for starting an internal combustion engine. The starter includes a pinion gear provided on the output shaft of the starter and a ring gear that transmits the rotational force generated by the pinion gear to the crankshaft of the engine. The pinion gear and the ring gear are meshed with each other not only when the engine is restarted but constantly. Compared to a conventional starter that causes mesh between a pinion gear and a ring gear only when the engine is started, the constant mesh type starter shortens the time needed to start the engine. Accordingly, it is particularly effective to employ the constant mesh type starter to restart the engine described in Japanese Laid-Open Patent Publication No. 2005-36790, which is automatically stopped and restarted, since such restarting must be accomplished rapidly compared to normal engine restarting.

When an internal combustion engine is started using a starter, as described in, for example, Japanese Laid-Open Patent Publication No. 63-235633, starting performance of the engine is improved normally by increasing the fuel injection amount in accordance with current engine coolant temperature and intake air temperature, compared to the case of autonomous operation of the engine. Such increase of the fuel injection amount at the time when the engine is started may be carried out in the above-described internal combustion engine, which is automatically stopped and restarted. Specifically, in this engine, the fuel injection amount is raised not only when the engine is normally started by turning on the ignition switch but also when the engine is restarted after being automatically stopped. However, in the engine that is automatically stopped and restarted, the condition of the engine may vary depending on the length of the time that has elapsed from when the engine has been automatically stopped to when the engine is restarted or the speed of the engine, as will be explained below.
(A) The engine is completely stopped, and a starter needs to be used to restart the engine.
(B) The engine is not completely stopped, but the starter is necessary for restarting the engine since switching to autonomous engine operation is impossible.
(C) The engine is not completely stopped, and switching to the autonomous engine operation is possible.

When the engine is in the condition (C), particulally, the engine is easily switched from an automatically stopped state to normal operation, and the engine is restarted (the vehicle is started) rapidly in response to a demand by the driver. When the engine is in the condition (A), the engine is completely stopped and thus maitained under substantially the same conditions as those of normal starting of the engine, which is brought about by turning on the ignition switch. Accordingly, the engine is restarted properly in a manner similar to the manner of the normal starting. When the engine is in the condition (B), the starter is employed to restart the engine. The fuel injection amount is thus increased in the same manner as the case of the condition (A) or the normal starting. However, since the engine is completely stopped when the engine is restarted in the condition (A) or by the normal starting, the pressure in the intake pipe is equal to the atomospheric level. Contrastingly, when the engine is restarted in the condition (B), negative pressure casued by operation of the engine remains in the intake pipe, thus limiting the amount of the air drawn into the cylinders. Accordingly, if the fuel injection amount is increased in this state as described above, the air-fuel mixture may become over-rich, deteriorating the ignitability of the air-fuel mixture.

The next coming prior art document JP 2008215154 relates to a controller of a vehicle internatal combustion engine in which in the case that the engine speed at the time of a restart command of the engine is below a threshold value a starter is operated promplty after the restart command while the opening of a throttle valve at the intake side of the engine is also controlled simultaneously.

### SUMMARY OF THE INVENTION

Accordingly, it is an objective of the present invention to provide a controller of a vehicle internal combustion engine that is automatically stopped and restarted, which controller improves restarting performance of the engine when the engine is not completely stopped and a starter is used to restart the engine.

To achieve the foregoing objective a controller of a vehicle internal combustion engine as defined in claim 1 is provided.

Other aspects and advantages of the present invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferred embodiments together with the accompanying drawings in which:
Fig. 1 is a diagram schematically showing the configuration of an in-line four-cylinder internal combustion engine having an automatic transmission according to one embodiment of the present invention;
Fig. 2 is a cross-sectional view schematically showing the configuration of a portion of a constant mesh type starter mounted in the engine shown in Fig. 1;
Fig. 3 is a chart illustrating switching modes related to economy running performed by an electronic control unit of Fig. 1;
Fig. 4 is a flowchart representing a restarting procedure carried out by the electronic control unit of Fig. 1; and
Fig. 5 is a timing chart of the restarting procedure shown in Fig. 4, where section (a) shows changes of traveling modes, section (b) shows changes of the engine speed, section (c) shows changes of the opening degree of a throttle valve, section (d) shows changes of the time at which a starter is actuated, and section (e) shows changes of the time at which engine start fuel injection is carried out.

### DETAILED DESCRIPTION OF THE PREFERRED EMBODIMENTS

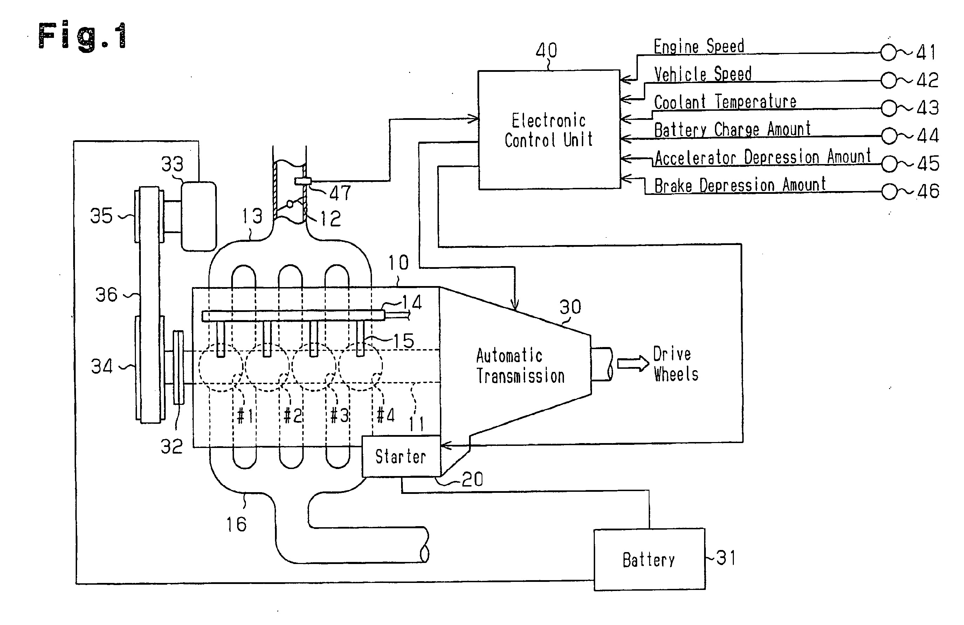

An embodiment of the present invention will now be described with reference to Figs. 1 to 5. An internal combustion engine 10 of the present embodiment is mounted in an automatic-transmission vehicle and is automatically stopped and restarted under certain conditions related to operation of the vehicle.

Fig. 1 shows the schematic configuration of the internal combustion engine 10, which is an in-line four cylinder engine arranged in the automatic transmission vehicle, and the vicinity of the engine 10. As illustrated in Fig. 1, an intake pipe 13 and an exhaust pipe 16 are each connected to four cylinders #1, #2, #3, #4, which are arranged in line in the engine 10. The intake pipe 13 supplies air to the cylinders #1, #2, #3, #4. The exhaust pipe 16 discharges exhaust gas, which is produced through combustion of air-fuel mixture in the cylinders #1, #2, #3, #4. The intake pipe 13 and the exhaust pipe 16 are each branched into four lines at the connecting portion with respect to the cylinders #1, #2, #3, #4. A throttle valve 12 regulating the amount of air drawn into the intake pipe 13 and an air flowmeter 47 measuring the amount of the drawn air are arranged in the intake pipe 13 at the positions upstream from the branching point of the intake pipe 13. A fuel supply pipe 14 is provided to conduct fuel, which is supplied from a fuel tank to the cylinders #1, #2, #3, #4 for combustion, to the cylinders #1, #2, #3, #4. under high pressure. Four fuel injections valves 15 through which the high-pressure fuel is injected directly into the cylinders #1, #2, #3, #4 are connected to the fuel supply pipe 14.

Each of the cylinders #1, #2, #3, #4 has a piston reciprocating in the corresponding cylinder #1, #2, #3, #4 when the air-fuel mixture, which is the air supplied through the intake pipe 13 and the fuel injected through the fuel injection valves 15, is burned. The pistons are connected to a single crankshaft 11 through a connecting rod converting reciprocation of the corresponding piston to rotation. A first end of the crankshaft 11 is connected to the drive wheels through an automatic transmission 30, which automatically changes the transmission ratio, or,, in other words, the degree of speed reduction of the engine operation, in accordance with the operating state of the engine such as the traveling speed of the vehicle and the engine speed. A first pulley 34 is arranged at a second end of the crankshaft 11. A belt 36 is arranged around the first pulley 34 and a second pulley 35, which is provided at an end of an output shaft of a generator-motor 33. The generator-motor 33 generates power through rotation of the crankshaft 11 and charges the power in a battery 31. The generator-motor 33 functions also as a motor driving an auxiliary device such as an air conditioner (a compressor of the air conditioner, to be exact) when the rotation of the crankshaft 11 is stopped. An electromagnetic clutch 32, which selectively permits and prohibits operable connection between the crankshaft 11 and the generator-motor 33, is arranged at the joint portion between the crankshaft 11 and the first pulley 34.

When the engine 10 operates, air is supplied from the intake pipe 13 to the cylinders #1, #2, #3, #4 by the amount regulated by the throttle valve 12 in accordance with the operating state of the engine 10. The air-fuel mixture, which is the mixture of the supplied air and the fuel injected through the fuel injection valves 15, is then burned in the cylinders #1, #2, #3, #4. The exhaust gas, which is produced through such burning, is discharged through the exhaust pipe 16. When the air-fuel mixture is burned, the reciprocation of the piston in each cylinder #1, #2, #3, #4 is converted to rotation by the corresponding connecting rods, thus rotating the crankshaft 11. The rotation of the crankshaft 11 is transmitted to the generator-motor 33 through the first pulley 34 that is connected to the crankshaft 11 through the electromagnetic clutch 32. This causes the generator-motor 33 to generate power. When the engine 10 is stopped and the aforementioned auxiliary device such as the air conditioner (the compressor) is to be actuated, the crankshaft 11 and the first pulley 34 are disconnected from each other by the electromagnetic clutch 32. This causes the generator-motor 33 to function as the motor driving the auxiliary device.

The engine 10 also has a starter 20. If the ignition switch is turned on when operation of the engine 10 is in a stopped state, the starter 20 rotates the crankshaft 11 by the power supplied from the battery 31, thus promoting autonomous operation of the engine 10.

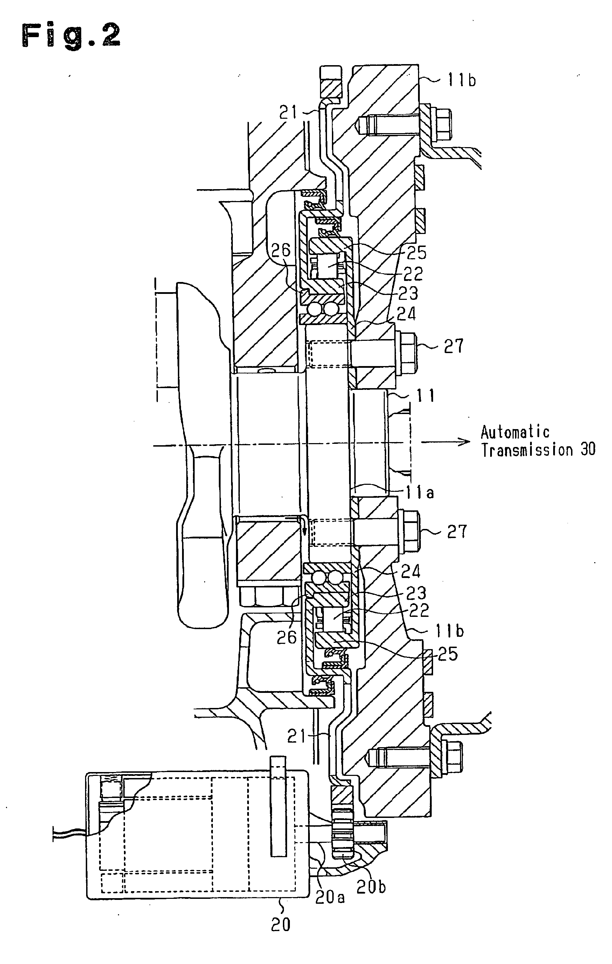

The configuration of the starter 20 and the configuration of a mechanism that transmits the rotational force of the starter 20 to the crankshaft 11 will hereafter be explained in detail with reference to Fig. 2.

As illustrated in Fig. 2, a large diameter portion 11a is formed at the first end of the crankshaft 11, which is connected to the automatic transmission 30. The large diameter portion 11a is press fitted into a ball bearing 26, which is a roller bearing. A disk-like ring gear 21 is arranged at a radially outside position of the ball bearing 26. The ring gear 21 has an inner race 23, which is arranged at a radially inner position of the ring gear 21. The inner race 23 is engaged with the outer circumference of the ball bearing 26. A disk-like outer race member 24 is arranged around the crankshaft 11. The outer race member 24 is opposed to the inner race 23 in a radial direction and has an outer race 25, which is arranged around the inner race 23. A one-way clutch 22, which permits transmission of the rotational force in one direction from the ring gear 21 to the outer race member 24 but prohibits transmission of the rotational force in the aforementioned direction from the outer race member 24 to the ring gear 21, is arranged between the inner race 23 and the outer race 25. The outer race member 24, together with a flywheel 11b engaged with the first end of the crankshaft 11, is fastened to the large diameter portion 11a by means of a bolt 27. The flywheel 11b suppresses uneven rotation of the crankshaft 11.

The teeth formed along the outer circumference of the ring gear 21 are constantly meshed with the teeth of a pinion gear 20b, which is arranged on an output shaft 20a of the starter 20.

When the ignition switch is turned on, the power is supplied from the battery 31 to the starter 20, thus actuating the starter 20. This rotates the pinion gear 20b, which is arranged on the output shaft 20a of the starter 20, and rotation of the pinion gear 20b is transmitted to the ring gear 21. Rotation of the ring gear 21 is then transmitted to the outer race member 24 through the one-way clutch 22, thus rotating the crankshaft 11 fastened to the outer race member 24.

Rotation of the crankshaft 11 causes autonomous operation of the engine 10. Afterwards, when the rotational speed of the crankshaft 11 becomes higher than the rotational speed of the starter 20, which is the rotational speed of the ring gear 21 rotating together with the starter 20, the rotational speed of the outer race member 24 rotating together with the crankshaft 11 becomes higher than the rotational speed of the ring gear 21. The one-way clutch 22 then disengages the ring gear 21 and the outer race member 24 from each other, thus preventing the rotational force of the crankshaft 11 from being transmitted to the starter 20 through the outer race member 24 and the ring gear 21. Accordingly, despite the fact that the pinion gear 20b and the ring gear 21 are constantly meshed with each other, the starter 20 and the ring gear 21 may be rotated only when necessary, such as when the engine 10 is started. Compared to a starter that needs to cause the pinion gear 20b to mesh with the ring gear 21 every time the starter 20 is actuated, the constant mesh type starter 20 does not consume the time for meshing the gears 20b, 21 with each other and thus reduces the time necessary for starting the engine 10.

With reference to Fig. 1, the engine 10 or the vehicle in which the engine 10 is mounted includes the following sensors as sensors detecting the operating state of the engine 10 or the vehicle.
(a) An engine speed sensor 41 that detects the speed of the engine 10, which is the rotational speed of the crankshaft 11;
(b) A vehicle speed sensor 42 that detects the traveling speed of the vehicle in which the engine 10 is mounted;
(c) A coolant temperature sensor 43 that detects the temperature of the engine coolant, which cools the engine 10;
(d) A battery current sensor 44 that detects the electric current flowing into and from the battery 31 in order to calculate the charge amount of the battery 31;
(e) An accelerator depression amount sensor 45 that detects the depression amount of an accelerator pedal arranged in the vehicle; and
(f) A brake pedal sensor 46 that detects the depression amount of a brake pedal arranged in the vehicle.

Detection signals of the sensors 41 to 46 and the air flowmeter 47 are input to an electronic control unit 40. The electronic control unit 40 is configured mainly by a microcomputer that has a central processing unit (CPU), a program memory (a ROM), and a data memory (a RAM) and performs various types of control including control of the automatic transmission 30, control of the fuel injection valves 15, and control of the starter 20. The electronic control unit 40 includes an input section and drivers as peripheral circuits of the microcomputer. The input section receives the detection signals from the above-described sensors. The drivers drive various types of actuators in response to commands from the microcomputer. The sensors are electrically connected to the input section of the electronic control unit 40. An actuator related to transmission ratio control of the automatic transmission 30, the fuel injection valves 15, and the starter 20 are each electrically connected to an output section of the electronic control unit 40.

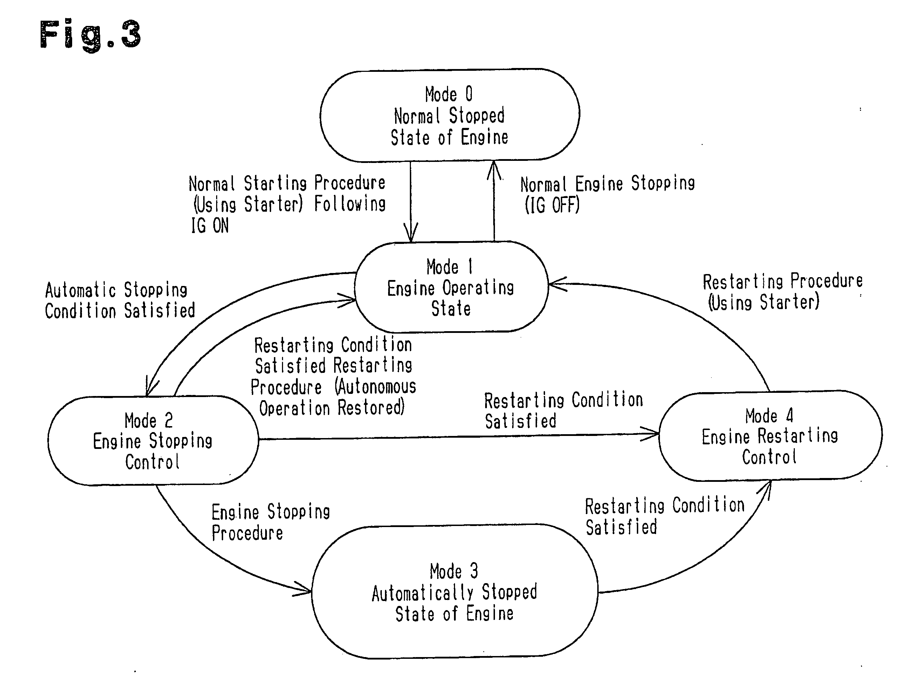

The electronic control unit 40 performs control related to economy running by which the engine 10 is automatically stopped and restarted in accordance with the operating state of the vehicle in which the engine 10 is mounted and operation of the vehicle. Details of the control related to the economy running will hereafter be explained with reference to Fig. 3.

As illustrated in Fig. 3, when the ignition switch (IG) of the vehicle that has been held in a stopped state is switched from the OFF position to the ON position by the driver, the electronic control unit 40 is activated. The electronic control unit 40 then sets the control mode related to the economy running to the mode indicating a normal stopped state of the engine operation, which is the mode 0. When the driver switches the ignition switch to the STA (start) position, the starter 20 is actuated and the crankshaft 11 is rotated, thus starting the engine 10. When starting of the engine 10 is completed and the engine 10 starts the autonomous operation, the electronic control unit 40 sets the control mode to the mode 1, which indicates an engine running state. In this state, in which the mode 1 is set, when the driver switch the ignition switch to the OFF" position, the electronic control unit 40 performs a normal engine stopping procedure to stop the engine 10 and changes the control mode to the mode 0. When the control mode is the mode 1, the electromagnetic clutch 32 (see Fig. 1) connects the crankshaft 11 to the generator-motor 33. This causes the generator-motor 33 to rotate together with the crankshaft 11 and thus generate the power. The generated power is charged in the battery 31.

If a condition for automatically stopping the engine 10 is satisfied due to temporary stop of the vehicle for, for example, a stop signal when the engine 10 is in the running state, or in other words, when the control mode is set to the mode 1, the electronic control unit 40 changes the control mode from the mode 1 to the mode 2.

The condition for automatically stopping the engine 10 may include the conditions described below:
(g) The depression amount of the accelerator pedal is 0;
(h) The traveling speed SP of the vehicle is lower than or equal to a predetermined speed Spa;
(i) The brake pedal is depressed;
(j) The engine coolant temperature TW is higher than or equal to a predetermined temperature TWa; and
(k) The charge amount VBAT of the battery 31 is greater than or equal to a predetermined value VBATa.

Particularly, in the present embodiment, the electronic control unit 40 determines that the condition for automatically stopping the engine 10 is satisfied when it is determined that the above-described conditions are all met with reference to the detection signals of the sensors 42, 43, 44, 45, 46. The threshold values SPa, TWa, and VBATa, by which it is determined whether the condition for automatically stopping the engine 10 is satisfied, are calculated in advance through experiments, for example, and stored in the program memory (the ROM) of the electronic control unit 40 (the microcomputer). The temperature TWa is set to the minimum value of such a range that combustion of the air-fuel ratio is not hampered when the engine 10 is restarted. The charge amount VBATa is set to the minimum value of such a range that the engine operation is allowed.

When the condition for automatically stopping the engine 10 is satisfied and the control mode is set to the mode 2, the electronic control unit 40 stops injection of the fuel into the cylinders #1, #2, #3, #4 through the fuel injection valves 15, thus stopping operation of the engine 10. Afterwards, when the engine 10 is completely stopped, or in other words, for example, when the detection signal of the engine speed sensor 41 indicates that the engine speed is 0, the electronic control unit 40 switches the control mode to the mode 3, which indicates an automatically stopped state of the engine operation. When the control mode is the mode 3, the crankshaft 11 and the generator-motor 33 are disengaged from each other by the electromagnetic clutch 32. This actuates the generator-motor 33 as the motor, so that the output of the motor actuates the auxiliary device such as the air conditioner (the compressor).

If a condition for restarting the engine 10 is satisfied when the control mode corresponds to the mode 3, the electronic control unit 40 changes the control mode from the mode 3 to the mode 4. The condition includes the conditions described below.
(l) The brake pedal is released;
(m) The depression amount of the accelerator pedal is not 0; and
(n) The charge amount VBAT of the battery 31 drops to a value smaller than the predetermined value VBATa.

In the present embodiment, when the electronic control unit 40 determines that any one of the above-described conditions is met from the detection signals of the sensors 44, 45, 46, the electronic control unit 40 determines that the condition for restarting the engine 10 is satisfied.

When the control mode is set to the mode 4, the constant mesh type starter 20 is actuated and the crankshaft 11 is rotated to restart the engine 10. The crankshaft 11 and the generator-motor 33 are then reconnected to each other by the electromagnetic clutch 32, thus allowing the generator-motor 33 to function as the power generator. Afterwards, when the engine 10 is restarted by the starter 20 and resumes the autonomous operation, the electronic control unit 40 sets the control mode to the mode 1.

As has been described, the electronic control unit 40 of the present embodiment is capable of reducing the fuel consumption of the engine 10 by automatically stopping and restarting the engine operation in accordance with the operating state of the engine 10 or the vehicle or the traveling state of the vehicle.

If the above-described condition for restarting the engine 10 is satisfied before a necessary length of time for completely stopping the engine 10 elapses when the control mode is the mode 2, the control mode is switched from the mode 2 to the mode 4, which is the mode for restarting the engine 10, without being set to the mode 3, before stopping of the engine 10 is completed. At this stage, if the speed of the engine 10 is in such a range that the engine 10 can restore the autonomous operation, or in other words, if the engine operation is restartable without employing the starter 20, the normal operation of the engine 10 is resumed by performing fuel injection or ignition in accordance with the operating state of the engine 10. In this case, the control mode is set to the mode 1. Contrastingly, if the speed of the engine 10 is in such a range that the engine 10 cannot restore the autonomous operation, or in other words, if the starter 20 must be employed to restart the engine 10, the engine 10 is started in the same manner as the normal engine starting.

However, although the engine operation is completely stopped when the normal engine starting is performed or when the engine 10 is restarted in accordance with the mode 4, the engine operation is not stopped when the control mode is switched from the mode 2 to the mode 4. Accordingly, when the engine 10 is restarted after the control mode has been switched in this manner, negative pressure remains in the intake pipe 13 in accordance with the engine speed at the time when the control mode was switched. In other words, compared to the case in which the engine operation is completely stopped, the amount of the air drawn into the cylinders is restricted by the amount corresponding to the negative pressure remaining in the intake pipe 13 when the engine operation is not stopped. However, when the engine 10 is restarted by the starter 20, the fuel is injected into the cylinders #1, #2, #3, #4 through the fuel injection valves 15 by the amount corresponding to an engine start fuel injection amount, which is set in advance in accordance with the temperature of the engine coolant. Accordingly, if the engine 10 is restarted using the starter 20 when the engine operation is not completely stopped and the intake air amount is restricted, the fuel injection amount becomes excessively great with respect to the intake air amount. This may deterirate the ignitability of the air-fuel mixture.

To solve this problem, by performing a restarting procedure of the engine 10 after the engine 10 has been automatically stopped, the electronic control unit 40 of the present embodiment improves the restarting performance of the engine 10 when the engine operation is not completely stopped and the starter 20 is employed to restart the engine 10.

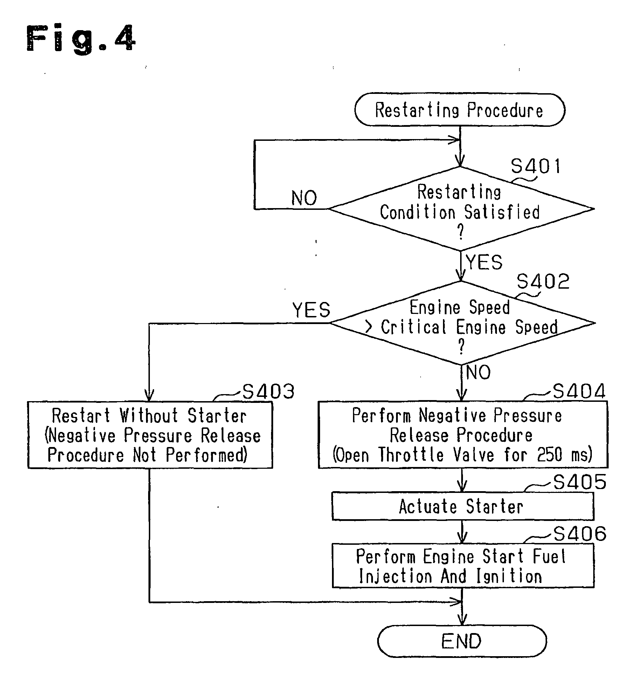

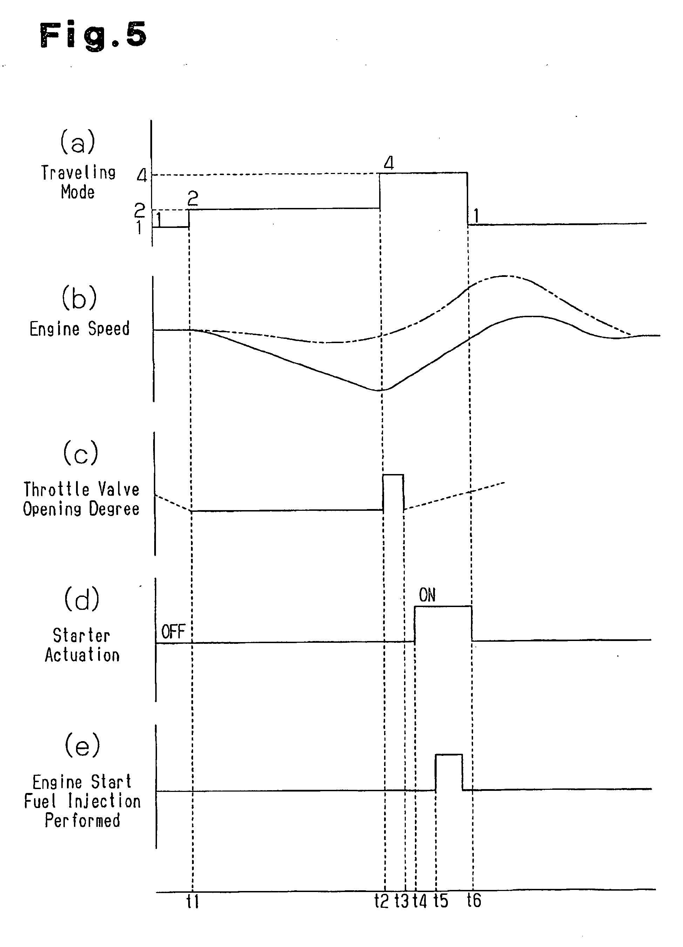

The restarting procedure performed by the electronic control unit 40 will hereafter be described in detail with reference to Figs. 4 and 5.

Fig. 4 is a flowchart representing the restarting procedure of the engine 10, which is carried out by the electronic control unit 40. The restarting procedure is performed when the condition for restarting the engine 10 is satisfied and the engine operation is not completely stopped, after the condition for automatically stopping the engine 10 has been met.

With reference to Fig. 4, in the restarting procedure, it is first determined whether the condition for restarting the engine 10 is satisfied when the condition for automatically stopping the engine 10 is met (step S401). Determination that the condition for restarting the engine 10 is satisfied is brought about if any one of the three above-described conditions (I) to (n) is met.

When it is determined that the condition for restarting the engine 10 is satisfied (step S401: YES), the electronic control unit 40 calculates the engine speed based on the detection signal output by the engine speed sensor 41. The electronic control unit 40 also determines whether the current engine speed is greater than a critical engine speed (which is, for example, 500 rpm), which is an engine speed slightly lower than the idle engine speed (which is, for example, 600 to 800 rpm) (step S402). When the engine speed is greater than the critical engine speed (step S402: YES), the electronic control unit 40 determines that the engine speed is in such a range that the engine 10 can restore the autonomous operation and restarts the engine 10 without employing the starter 20 (step S403). In other words, the electronic control unit 40 calculates the fuel injection amount, the fuel injection timing, and the ignition timing in accordance with the depression amount of the accelerator pedal to start the engine operation, in the same manner as the normal engine starting.

Contrastingly, when it is determined that the engine speed is lower than or equal to the critical engine speed (step S402: NO), it is also determined that the engine speed is in such a range that the autonomous engine operation cannot be restored. In this case, a negative pressure release procedure is performed in order to release the negative pressure remaining in the intake pipe 13, caused by the engine operation (step S404). Specifically, the throttle valve 12, which is arranged in the intake pipe 13, is maintained open for the period of 250 ms since the determination that the engine speed is in such a range that the autonomous engine operation cannot be restored in step S402. When the throttle valve 12 is held open so as to release the negative pressure from the intake pipe 13, the amount of the air drawn into the cylinders #1, #2, #3, #4 may become excessively great, thus causing excessive speed of the engine 10, which is referred to as rev-up of the engine 10. However, in the present embodiment, this problem is avoided by limiting the negative pressure release procedure to the opening period of 250 ms and performing the procedure only when the engine speed is smaller than or equal to the critical engine speed.

Afterwards, the starter 20 is actuated to rotate the crankshaft 11 (step S405). Fuel is then injected from the fuel injection valves 15 by the amount corresponding to the engine start fuel injection amount in accordance with the engine coolant temperature detected by the coolant temperature sensor 43 and the produced air-fuel mixture is subjected to ignition (step S406). Specifically, the engine start fuel injection amount is calculated in advance based on experiment results or the like and stored in the program memory (the ROM) of the electronic control unit 40 as, for example, a map setting the fuel injection amount for the respective values of the engine coolant temperature. In the present embodiment, the starter 20 is activated when 100 ms elapses since the end of opening of the throttle valve 12, which is the negative pressure release procedure. In other words, release of the negative pressure from the intake pipe 13 is accomplished by temporarily opening the throttle valve 12 before the various types of control for restarting the engine 10 using the starter 20 are started. This maintains control performance and flexibility of each type of control when the engine 10 is restarted.

Fig. 5 is a timing chart representing an example of operation in accordance with the restarting procedure. Section (a) illustrates switching of traveling modes, section (b) illustrates change of the engine speed (represented by the solid lines), and section (c) illustrates change of the opening degree of the throttle valve 12. Section (d) illustrates the timings at which the starter 20 is actuated, and section (e) illustrates the timings at which the engine start fuel injection is performed.

With reference to Fig. 5, if the condition for automatically stopping the engine 10 is satisfied at the time point t1 when the vehicle is moving, the electronic control unit 40 changes the control mode from the mode 1 to the mode 2. This regulates the opening degree of the throttle valve 12 to a value corresponding to a fully closed state or a substantially fully closed state. The engine speed then gradually drops toward a stopped state until the condition for restarting the engine 10 is met at the time point t2. When the restarting condition is satisfied and the engine speed is lower than or equal to the critical engine speed at the time point t2, the throttle valve 12 is maintained open for only 250 ms till the time point t3, as has been described. The starter 20 is actuated at the time point t4, which is after 100 ms since closure of the throttle valve 12, and the engine start fuel injection is performed at, for example, the time point t5, while the starter 20 is operated from the time point t4 to the time point t6. When the autonomous operation of the engine 10 is brought about by the operation of the starter 20 and the engine start fuel injection, the starter 20 is de-actuated and the control mode is switched from the mode 4 to the mode 1.

In section (b) of Fig. 5, a reference engine speed change is represented by the double-dotted chain lines. The reference engine speed change is an example of change of the engine speed in the case in which the opening procedure of the throttle valve 12 (the negative pressure release procedure) is carried out despite the fact that, for example, the engine speed is in such a range that the autonomous engine operation can be restored. As indicated by the double-dotted chain lines in section (b) of Fig. 5, if fuel vapor flows into the cylinders #1, #2, #3, #4 due to, for example, sticking of a purge valve and the engine combustion is continued despite the control mode that has been switched from the mode 1 to the mode 2 and the engine stopping procedure being carried out, the engine speed may not be lowered sufficiently. In this state, if the condition for restarting the engine 10 is satisfied and the procedure of opening the throttle valve 12 (the negative pressure release procedure) is executed, rev-up of the engine speed may occur as indicated by the double-dotted chain lines in section (b) of Fig. 5. However, in the present embodiment, this procedure is prohibited when the engine speed at the time when the condition for restarting the engine 10 is met exceeds an upper limit engine speed. This prevents the engine rev-up.

The controller 40 of the engine 10 according to the present invention has the advantages described below.
(1) The internal combustion engine 10, which includes the starter 20 constantly meshed with the crankshaft 11, is automatically stopped and restarted. When the engine 10 is automatically restarted using the starter 20, the throttle valve 12 is temporarily held open under the condition that the engine speed is lower than or equal to the critical engine speed (the condition doesn't apply to a case in which the engine speed is 0 rpm). In this manner, the negative pressure caused in the intake pipe 13 by the engine operation when the automatic stopping procedure is performed is released from the intake pipe 13. This prevents the proportion of the fuel injection amount to the amount of the air drawn into the engine 10 from becoming excessively great, even when the engine start fuel injection is carried out through operation of the starter 20. In other words, the restarting performance of the engine 10 using the starter 20 is improved.
(2) The upper limit of the engine speed range allowing the engine 10 to restore the autonomous operation is set to an engine speed slightly lower than the idle speed of the engine 10, that is, to 500 rpm. This suppresses excessive rise of the engine speed caused by opening the throttle valve 12.
(3) The period in which the throttle valve 12 is temporarily maintained open is set to a fixed value, which is 250 ms. This suppresses or releases the negative pressure occurring in the intake pipe 13, and a sufficient intake air amount is easily ensured. Accordingly, the air-fuel mixture is prevented from becoming over-rich.
(4) When the condition for restarting the engine 10 is satisfied, the starter 20 is actuated after 100 ms since the throttle valve 12 is closed after having been temporarily open. In other words, the negative pressure is completely released through temporary opening of the throttle valve 12 by the time various types of control are started to restart the engine 10 using the starter 20. This maintains the control performance and flexibility of the control when the engine 10 is restarted.

Although the opening degree of the throttle valve 12 is constant throughout the period in which the throttle valve 12 is held open, the opening degree of the throttle valve 12 is varied in accordance with the engine speed. Specifically, the opening degree of the throttle valve 12 is set to a greater value as the engine speed at the time when the condition for restarting the engine 10 is satisfied becomes higher. This adds the advantage (5), as described below, to the above-described advantages (1) to (4).
(5) The opening degree of the throttle valve 12 becomes greater as the engine speed at the time when the condition for restarting the engine 10 is met becomes higher, or in other words, as the remaining negative pressure becomes greater. This further reliably releases the remaining negative pressure. The opening degree of the throttle valve 12 becomes smaller as the engine speed at the time when the condition for restarting the engine 10 is met becomes lower, that is, as the remaining negative pressure becomes smaller. This further reliably suppresses excessive increase of the amount of the air drawn into the engine 10, which is caused by opening of the throttle valve 12, while releasing the negative pressure.

The present invention is not restricted to the configuration illustrated in the above-described embodiment but may be embodied in modified forms, for example, as described below.

The conditions for automatically stopping and restarting the engine 10 are not restricted to those illustrated in the above embodiment. These conditions may be modified in any suitable manners as long as the conditions ensure determination, for example, whether the vehicle is temporarily stopped or whether the vehicle is to be restarted after having been in a temporarily stopped state.

The configuration of the one-way clutch 22 is not restricted to that of the above illustrated embodiment. Specifically, the one-way clutch 22 may be configured in any suitable manners as long as the starter 20 is a constant mesh type and the one-way clutch 22 permits transmission of rotation from the starter 20 to the crankshaft 11 but prohibits transmission of rotation from the crankshaft 11 to the starter 20.

The internal combustion engine 10, which is the control target, is a direct injection type engine in which the fuel is injected directly into the cylinders #1, #2, #3, #4. However, the engine 10 is not restricted to this type but may be a port injection type internal combustion engine having a fuel injection valve arranged in an intake pipe. Alternatively, the cylinders of the internal combustion engine in which the present invention is employed may be arranged in any suitable manner other than the in-line four-cylinder arrangement.

The vehicle in which the controller 40 of the engine 10 is mounted is not restricted to an automatic transmission vehicle but may be a manual transmission vehicle, or an MT vehicle. In this case, one of the conditions for automatically stopping or restarting the engine 10 may be that the clutch pedal, not the brake pedal as in the case of the AT vehicle, is released or depressed.

The period in which the throttle valve 12 is maintained open may be varied in accordance with, for example, the level of the negative pressure remaining in the intake pipe 13. In this case, it is preferable to set this period in such a range that the engine speed is prevented from excessively rising due to opening of the throttle valve 12.

The critical engine speed is not restricted to 500 rpm. The critical engine speed may be set to any suitable value as long as the value is in such a range that the engine 10 cannot be restarted without the starter 20 and is smaller than the idle engine speed so that the engine speed does not increase excessively when the negative pressure release procedure is carried out.

## Claims

1. A controller (40) of a vehicle internal combustion engine (10) that is automatically stopped and restarted under a prescribed condition related to operation of the vehicle, the engine (10) including an output shaft (20a), a starter (20) constantly meshed with the output shaft (20a), and a throttle valve (12) regulating an intake air amount supplied to the engine (10), wherein, after the engine (10) has been subjected to an automatic stopping procedure, the controller (40) restarts the engine (10) when a restarting condition is met, wherein the controller (40) uses the starter to restart the engine (10) if an engine speed is in such a predetermined range that autonomous operation of the engine (10) cannot be restored, wherein
the controller (40) temporarily opens the throttle valve (12) on the condition that the engine speed at the time when the restarting condition is met is not zero and is in the predetermined range, and wherein
a period in which the throttle valve (12) is maintained open is set to a period from when the restarting condition is met to when a negative pressure produced in an intake pipe (13) of the engine (10) due to rotation of the output shaft (20a) is released, the controller being **characterized in that**,
in the period in which the throttle valve (12) is maintained open, an opening degree of the throttle valve (12) is set to a greater value as the engine speed at the time when the restarting condition is met becomes higher.

2. The controller according to claim 1, wherein an upper limit engine speed of the predetermined range is set to a value smaller than an idle speed of the engine (10).

3. The controller according to claim 1 or 2, wherein, when the restarting condition is met, the starter (20) is actuated after the throttle valve (12) is temporarily opened.

4. The controller according to claim 3, wherein the starter is actuated after a predetermined period of time since opening of the throttle valve (12) for a predetermined period of time is ended.

## Patentansprüche

1. Steuergerät (40) von einem Fahrzeugverbrennungsmotor (10), der unter einer vorgeschriebenen Bedingung, die sich auf einen Betrieb des Fahrzeugs bezieht, automatisch gestoppt und erneut gestartet wird, wobei der Motor (10) eine Ausgabewelle (20a), einen Anlasser (20), der permanent mit der Ausgabewelle (20a) in Eingriff steht, und ein Drosselventil (12), das eine Ansaugluftmenge, die zum Motor (10) geliefert wird, regelt, enthält, wobei, nachdem der Motor (10) einer automatischen Stoppprozedur ausgesetzt wurde, das Steuergerät (40) den Motor (10) erneut startet, wenn eine Neustartbedingung erfüllt ist, wobei das Steuergerät (40) den Anlasser verwendet, um den Motor (10) erneut zu starten, falls sich eine Motordrehzahl in solch einem vorgegeben Bereich befindet, dass ein autonomer Betrieb des Motors (10) nicht wiederhergestellt werden kann, wobei
das Steuergerät (40) das Drosselventil (12) unter der Bedingung vorübergehend öffnet, dass die Motordrehzahl zum Zeitpunkt, wenn die Neustartbedingung erfüllt ist, nicht Null ist und sich diese in dem vorgegebenen Bereich befindet, und wobei
ein Zeitabschnitt, in dem das Drosselventil (12) offen gehalten wird, auf einen Zeitabschnitt von einer Erfüllung der Neustartbedingung bis zu einer Freigabe eines Unterdrucks, der in einem Ansaugrohr (13) des Motors (10) aufgrund von Rotation der Ausgabewelle (20a) produziert wird, festgesetzt wird, wobei das Steuergerät **dadurch gekennzeichnet ist, dass**
in dem Zeitabschnitt, in dem das Drosselventil (12) offen gehalten wird, ein Öffnungsgrad des Drosselventils (12) auf einen größeren Wert festgesetzt wird, wenn die Motordrehzahl zum Zeitpunkt, wenn die Neustartbedingung erfüllt ist, höher wird.

2. Steuergerät nach Anspruch 1, wobei eine obere Grenzmotordrehzahl des vorgegebenen Bereichs auf einen Wert festgesetzt wird, der kleiner als eine Leerlaufgeschwindigkeit des Motors (10) ist.

3. Steuergerät nach Anspruch 1 oder 2, wobei, wenn die Neustartbedingung erfüllt ist, der Anlasser (20) betätigt wird, nachdem das Drosselventil (12) vorübergehend geöffnet wird.

4. Steuergerät (40) nach Anspruch 3, wobei der Anlasser betätigt wird, nachdem eine vorgegebene Zeitspanne seit einem Öffnen des Drosselventils (12) für eine vorgegebene Zeitspanne beendet ist.

## Revendications

1. Contrôleur (40) de moteur à combustion interne de véhicule (10) qui est arrêté et redémarré automatiquement dans une condition prescrite liée au fonctionnement du véhicule, le moteur (10) comprenant un arbre de sortie (20a), un démarreur (20) engrené en permanence avec l'arbre de sortie (20a), et un papillon des gaz (12) qui régule une quantité d'air d'admission fournie au moteur (10), dans lequel, après que le moteur (10) a été soumis à une procédure d'arrêt automatique, le contrôleur (40) redémarre le moteur (10) dès qu'une condition de redémarrage est satisfaite, dans lequel le contrôleur (40) utilise le démarreur pour redémarrer le moteur (10) si une vitesse du moteur se trouve dans des limites prédéterminées telles que le fonctionnement autonome du moteur (10) ne peut pas être rétabli, dans lequel le contrôleur (40) ouvre provisoirement le papillon des gaz (12) à condition que la vitesse du moteur au moment où la condition de redémarrage est satisfaite ne soit pas nulle et se trouve dans les limites prédéterminées, et dans lequel une période pendant laquelle le papillon des gaz (12) est maintenu ouvert est définie comme une période située entre le moment auquel la condition de redémarrage est satisfaite et un moment auquel une pression négative produite dans un tuyau d'admission (13) du moteur (10) en raison de la rotation de l'arbre de sortie (20a) est relâchée, le contrôleur étant **caractérisé en ce que**
pendant la période pendant laquelle le papillon des gaz (12) est maintenu ouvert, le degré d'ouverture du papillon des gaz (12) est défini sur une valeur plus élevée lorsque la vitesse du moteur au moment où la condition de redémarrage est satisfaite augmente.

2. Contrôleur selon la revendication 1, dans lequel la vitesse limite maximale du moteur, dans les limites prédéterminées, est réglée sur une valeur inférieure à une vitesse de ralenti du moteur (10).

3. Contrôleur selon la revendication 1 ou 2, dans lequel, lorsque la condition de redémarrage est satisfaite, le démarreur (20) est actionné après que le papillon des gaz (12) a été provisoirement ouvert.

4. Contrôleur selon la revendication 3, dans lequel le démarreur est actionné après une période de temps prédéterminée à compter de la fin de l'ouverture du papillon des gaz (12) pendant une durée prédéterminée.
